# EUROPÄISCHE PATENTSCHRIFT

(11) **EP 1 814 095 B1**
(45) Veröffentlichungstag und Bekanntmachung des Hinweises auf die Patenterteilung: **14.03.2012**
(21) Anmeldenummer: 07000833.9
(22) Anmeldetag: 17.01.2007
(51) Int. Cl.: G08G 1/0967, G01C 21/32

(54) **Verfahren zur Bestimmung eines zukünftigen Strassenverlaufs durch Kommunikation zwischen Kraftfahrzeugen**
Method for determining a future route by communication between vehicles
Procédé destiné à la détermination d'un tracé de route future à l'aide de la communication entre véhicules automobiles

(30) Priorität: 27.01.2006 DE 102006004130
(43) Veröffentlichungstag der Anmeldung: 01.08.2007
(73) Patentinhaber: AUDI AG, 85045 Ingolstadt (DE)
(72) Erfinder: Ebner, André Dr., 85049 Ingolstadt (DE); Wischhof, Lars, 21335 Lüneburg (DE)
(74) Vertreter: Thielmann, Frank

(56) Entgegenhaltungen:
- EP-A- 1 251 332
- US-A- 5 428 544
- US-A1- 2005 216 147
- US-A1- 2005 222 716
- WISCHOFF L ET AL: "SOTIS - a self-organizing traffic information system" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003; [IEEE VEHICULAR TECHNOLGY CONFERENCE], NEW YORK, NY : IEEE, US, Bd. 4, 22. April 2003 (2003-04-22), Seiten 2442-2446, XP010862319 ISBN: 978-0-7803-7757-8

## Beschreibung

Die Erfindung betrifft ein Verfahren zur Bestimmung eines zukünftigen Straßenverlaufs durch Kommunikation zwischen Kraftfahrzeugen.

Informationen über einen zukünftigen Straßenverlauf oder auch Informationen über den Verkehrszustand auf diesen Straßen können nützlich zur Bestimmung von Betriebsparametern eines Kraftfahrzeugs oder zur Bestimmung von Betriebsparametern von Fahrerassistenzsystemen eines Kraftfahrzeugs sein. Daher sind einige Verfahren bekannt, die auf einer Verknüpfung einer Positionsbestimmung, meist mit Hilfe eines GPS (Global Positioning System)-Sensors, in Verbindung mit dem digitalen Kartenmaterial beispielsweise eines Navigationssystems sowie weiteren, auf unterschiedliche Art und Weise empfangenen Informationen über den Straßenzustand arbeiten.

Konventionelle, heute im Einsatz befindliche Verkehrsinformationssysteme basieren auf einer umfangreichen Infrastruktur. Hierbei liefern fest installierte Sensoren, die beispielsweise in der Fahrbahn eingelassen oder an Brücken oder Schildern befestigt sind, Messdaten an eine Verkehrszentrale. In dieser werden Geschwindigkeit und Verkehrsfluss in Form einer umfangreichen Verkehrsanalyse ausgewertet. Das Ergebnis dieser Analyse kann dann entweder aktiv durch einen Fahrer über ein öffentliches zellulares Mobilfunknetz abgefragt werden oder die Stauinformationen werden mit Hilfe von Rundfunksystemen an die Verkehrsteilnehmer übermittelt. Die so verfügbaren Verkehrsinformationen sind jedoch oft bereits nicht mehr aktuell, wenn sie vom Kraftfahrzeug empfangen werden. Nachteilig ist zudem, dass eine kostenaufwendige Infrastruktur benötigt wird. Die Ermittlung von kurzfristigen lokalen Störungen wie Glätte oder Ähnlichem ist so nicht möglich. Die Übermittlung der Daten ins Fahrzeug ist mit hohem Aufwand und relativ großen Verzögerungen verbunden. Zudem ist zur Zuordnung der Informationen ein digitales Kartenmaterial, das gegebenenfalls sogar veraltet sein kann, notwendig. Dieses veraltete Kartenmaterial bietet auch die einzige Grundlage für eine Vorausschau bezüglich des Fahrbahnverlaufs, insbesondere der Fahrbahnkrümmung.

Daher wurden Verfahren vorgeschlagen, die Kommunikation zwischen Kraftfahrzeugen zur Ermittlung von Informationen nutzen. Eine Möglichkeit hierbei ist die so genannte Multihop-Kommunikation (vgl. DE 103 56 500 A1). Dabei wird eine Verbindung über mehrere Fahrzeuge hinweg aufgebaut, um ein bzw. mehrere vorausfahrende Fahrzeuge nach der aktuellen Verkehrslage anzufragen. Zur Funktionsfähigkeit dieses Verfahrens ist es jedoch notwendig, dass mindestens 10% aller Fahrzeuge ein solches System umfassen. Zudem ist man weiterhin auf digitales Kartenmaterial angewiesen, um die Information dem Straßenverlauf zuordnen und Krümmungen vorhersehen zu können.

Andere Systeme basieren auf dem Versand von Informationen an alle umliegenden Fahrzeuge (broadcast), um Informationen zu übersenden. Jedes Kraftfahrzeug sendet dabei die eigene Position und Geschwindigkeit sowie weitere Informationen. Die Positionen werden hierbei wiederum mit Hilfe einer digitalen Kartenbasis in den Kraftfahrzeugen gesammelt, indem die Straßen in Segmente fester Länge unterteilt werden, für die die Informationen jeweils gesammelt sind. Nachteiliger Weise ist das System wiederum auf das Vorhandensein digitaler Kartendaten angewiesen, um die Straßensegmente eindeutig identifizieren zu können (vgl. DE 102 03 891 A1). Eine Vorausschau bezüglich der Fahrbahnkrümmung erfolgt wiederum lediglich über möglicherweise veraltetes Kartenmaterial.

Der Erfindung liegt somit die Aufgabe zugrunde, ein Verfahren zur Bestimmung eines zukünftigen Straßenverlaufs durch Kommunikation zwischen Kraftfahrzeugen anzugeben, das vollständig unabhängig von digitalem Kartenmaterial und einer festen Infrastruktur ist sowie bereits dann funktionsfähig ist, wenn nur sehr wenige Fahrzeuge das Verfahren verwenden.

Zur Lösung dieser Aufgabe ist bei einem in Rede stehenden Verfahren vorgesehen, dass
- fortlaufend durch einen Sensor zur Bestimmung der Position des eigenen Kraftfahrzeugs Positionsdaten in einem geodätischen Koordinatensystem ermittelt werden,
- in Abhängigkeit eines definierten Auswahlkriteriums die Positionsdaten in einer Positionsdatenliste abgelegt werden,
- fortlaufend oder zyklisch die aktuelle Positionsdatenliste über ein Kommunikationsmittel gesendet wird,
- bei Empfang einer Positionsdatenliste eines anderen Verkehrsteilnehmers ein Abgleich der Positionsdatenlisten bzw. eine Ergänzung der eigenen Positionsdatenliste erfolgt und
- bei Vorhandensein von Daten, die Positionen vor dem eigenen Kraftfahrzeug beschreiben, aus diesen in der Positionsdatenliste gespeicherten Daten Informationen über den zukünftigen Straßenverlauf ermittelt werden.

Erfindungsgemäß ist also vorgesehen, dass jedes Kraftfahrzeug für seine aktuelle Straße eine Positionsdatenliste verwaltet. Jeder Eintrag enthält dabei die geografische Position eines Punktes, bestimmt anhand eines für alle Fahrzeuge gleichen Auswahlkriteriums. Begegnet nun beispielsweise ein entgegenkommendes Fahrzeug dem eigenen Kraftfahrzeug, so können beide Verkehrsteilnehmer ihre Positionsdatenlisten austauschen. Dadurch erhalten beide Informationen über den zukünftigen Verlauf der Straße, auf der sie sich befinden. Diese Informationen liegen anhand von mit Hilfe des Auswahlkriteriums codierten, in der Positionsdatenliste geordneten Positionen vor, die punktweise den Straßenverlauf wiedergeben. Daraus kann der zukünftige Verlauf der Straße auf Basis aktueller Informationen ermittelt werden. Zur Durchführung des Verfahrens ist lediglich eine Funkschnittstelle zum Senden und Empfangen von Datenpaketen zu und von umliegenden Fahrzeugen sowie ein Sensor zur Positionsbestimmung erforderlich. Vorteilhafter Weise ist das System vollständig unabhängig von digitalen Karten oder einer festen Infrastruktur, wie zum Beispiel Straßensensoren, zellularen Funknetzen, usw. Ein weiterer Vorteil des erfindungsgemäßen Verfahrens ist, dass es auf belebten Straßen wie Autobahnen bereits funktionsfähig ist, wenn nur sehr wenige Fahrzeuge, beispielsweise weniger als 5%, zur Durchführung des Verfahrens ausgebildet sind.

Die Positionsdatenliste stellt dabei idealerweise eine verknüpfte Liste dar, in der Positionen nach der Abfolge ihres Erreichens bei Befahren der Straße geordnet sind. Jedem Punkt, vom ersten und letzten Punkt abgesehen, ist dabei ein Vorgänger und eine Nachfolger zugeordnet, der jeweils das Auswahlkriterium erfüllt. Eine solche Liste ist mit Hilfe des Auswahlkriteriums leicht zu codieren und besitzt eine vernachlässigbare Größe, so dass sie ohne viel Aufwand und ohne Erzeugung von Datenflut versendbar und empfangbar ist.

Als Auswahlkriterium sind beispielsweise regelmäßig oder zumindest definiert mit einer gewissen Häufigkeit auftretende Ereignisse geeignet. So kann beispielsweise vorgesehen sein, dass jeweils nach Abfahren einer bestimmten Strecke, beispielsweise von 100 m, ein Positionsdatum in die Positionsdatenliste aufgenommen wird. In einer weiteren Alternative werden die Positionsdaten jeweils mit Ablauf eines bestimmten Zeitintervalls aufgenommen. So können beispielsweise alle 10 Sekunden Positionsdaten in der Positionsdatenliste abgelegt werden.

Mit besonderem Vorteil können die Positionsdaten bezüglich eines vorgegebenen geodätischen Rasters ermittelt werden und bei Überschreiten einer Linie des Rasters die Positionsdaten in der Positionsdatenliste abgelegt werden. Hierbei stellt also das Überschreiten der Rasterlinie das definierte Auswahlkriterium dar. Ein solches geodätisches Raster stellt eine einfach zu handhabende, globale Referenz dar, mit Hilfe derer die Positionsdaten in der Positionsdatenliste zugeordnet werden können. Zudem ist die Positionsdatenliste unter Zuhilfenahme des Rasters besonders leicht zu codieren.

Als geeignete Abmessungen für den Rasterabstand des vorgegebenen Rasters haben sich 50 - 200 m, insbesondere 100 m, erwiesen. Ein solcher Rasterabstand ermöglicht eine hinreichend genaue Bestimmung des zukünftigen Straßenverlaufs und schlüsselt auch Stau bzw. Gebiete besonderer Wetterlage hinreichend genau auf.

Vorteilhafter Weise kann als zusätzliche Information der Zeitpunkt der Aufnahme der Positionsdaten, insbesondere des Überschreitens der Rasterlinie, bestimmt und in der Positionsdatenliste, selbstverständlich der entsprechenden Position zugeordnet, abgelegt werden. Damit ist es beispielsweise möglich, das Verfahren so weiter zu bilden, dass bei Abgleich der Positionsdatenlisten nur die am zeitnächsten aufgenommenen Punkte in die eigene Positionsdatenliste aufgenommen werden. Eine größtmögliche Aktualität der Positionsdatenliste wird auf diese Art und Weise ermöglicht. Zudem werden keine unnützen, veralteten Informationen gespeichert.

In einer besonders vorteilhaften Weiterbildung des Verfahrens können von Erfassungsmitteln gewonnene zusätzliche Informationen, die den Betriebszustand des Kraftfahrzeugs und/oder seine Umgebung beschreiben, in der Positionsdatenliste der entsprechenden Position zugeordnet abgelegt werden. Mithin ist nicht nur der voraussichtliche Straßenverlauf aus der Positionsdatenliste bestimmbar, sondern auch eine jeder speziellen Position zugeordnete Information über den Straßenzustand oder die momentane Verkehrslage. Insbesondere bezüglich der Verkehrslage ist es vorteilhaft, wenn die zusätzlichen Informationen für beide Fahrtrichtungen getrennt abgelegt werden. Alternativ kann eine Positionsdatenliste für beide Fahrtrichtungen geführt werden. So kann sicher gestellt werden, dass beispielsweise Staus je nach Fahrtrichtung festgestellt werden können. Auch Fahrbahnglätten und sonstige Informationen könnender entsprechenden Fahrtrichtung zugeordnet werden.

Die zusätzlichen Informationen können die Geschwindigkeit des aufnehmenden Kraftfahrzeugs und/oder die Temperatur und/oder Daten eines Regensensors und/oder Daten eines Lichtsensors und/oder Daten über den Zustand der Lichtanlage und/oder Daten eines ESP-Systems und/oder Daten eines Antiblockiersystems und/oder eine Unfallwarnung und/oder die Höhe über Normal-Null und/oder der Betriebszustand des Motors und/oder eine fahrerinitiierte Radarmessgerätewarnung umfassen. Aus diesen zusätzlichen, den Positionen zugeordneten Daten können nun vorteilhafter Weise Informationen über den Straßenzustand und den dort herrschenden Verkehr ermittelt werden. Insbesondere kann bei Vorhandensein einer Höheninformation ein Höhenprofil erstellt werden, was mit digitalem Kartenmaterial im Stand der Technik nicht möglich ist. Das Wissen über Steigungs- und Gefällstrecken kann dann beispielsweise im Rahmen eines Energiemanagementsystems vorteilhaft genutzt werden. Von besonderem Vorteil ist es insbesondere bei Übersendung von Zusatzinformationen, wenn auch der Zeitpunkt der Aufnahme der Position und der Informationen gespeichert wird, so dass die Daten immer auf ihre Aktualität überprüft werden können.

Durch das erfindungsgemäße Verfahren wird letztendlich eine segmentweise Verdichtung der Informationen vorgenommen. Die einer Position zugeordneten Informationen sind diesem speziellen Ort zugeordnet, wodurch nicht Unmengen an Daten gesammelt werden, die so genannte Datenflut wird verhindert. Zudem ist aufgrund der allgemeinen Codierung anhand des geodätischen Rasters vollkommen irrelevant, wer die Informationen geschickt hat und woher sie geschickt werden. Das sendende Fahrzeug oder seine momentane Position ist für die Auswertung der Daten nicht relevant. Eine gezielte Anfrage, wie dies beispielsweise bei den Multihop-Verfahren vorgeschlagen wurde, ist bei dem erfindungsgemäßen Verfahren nicht nötig.

Die Kommunikation erfolgt vorzugsweise über ein Funknetzwerk, insbesondere ein WLAN-Netzwerk. Dabei können auch andere gängige Funkstandards, die ähnliche Reichweiten (etwa 500 m) aufweisen, verwendet werden.

Im Rahmen der vorliegenden Erfindung werden die Positionsdaten vorzugsweise durch einen GPS-Sensor bestimmt. Das GPS-System hat sich als ein überall verfügbarer und anerkannter Standard durchgesetzt.

Um ein Überlaufen von Speichermedien innerhalb des eigenen Kraftfahrzeugs zu verhindern und die Menge der zu versendenden Daten zu beschränken, kann vorgesehen sein, dass die Länge der Positionsdatenliste beschränkt wird. Eine solche Beschränkung kann beispielsweise dadurch realisiert werden, dass in die Positionsdatenliste nur Positionsdaten, die eine Position innerhalb eines vorbestimmten Abstandes vom eigenen Kraftfahrzeug beschreiben, eingetragen werden und Positionsdaten beschreibend eine Position außerhalb dieses Abstandes gelöscht werden. Es werden also lediglich Informationen innerhalb einer bestimmten Umgebung hinter dem Kraftfahrzeug und vor dem Kraftfahrzeug gesammelt und ausgewertet. Ein solcher Abstand kann beispielsweise 20 - 50 km betragen. Es kann jedoch auch vorgesehen sein, dass die Zahl der in der Liste gespeicherten Positionsdaten beschränkt ist. Bevor eine neue Position bei einer vollen Liste eingetragen wird, wird der älteste Eintrag gelöscht.

Die Codierung der Positionsdaten in der Positionsdatenliste kann anhand eines mit der Positionsdatenliste versendeten Fixpositionsdatums, insbesondere des Datums des am nächsten gelegenen Ortspunktes auf einer Rasterlinie, codiert werden. Das Fixpositionsdatum ist dabei, beispielsweise als die GPS-Ortsangabe eines bestimmten Fixpunktes, der Positionsdatenliste zugeordnet. Alle Positionsdaten der Positionsdatenliste sind dann bezüglich dieses Fixpunktes codiert. Da im Falle der Verwendung des Rasters alle durch die Positionsdaten beschriebenen Positionen auf einer Rasterlinie liegen, lässt sich die Position leicht durch Angabe von Rasterlinien-Abständen in einer Richtung in Verbindung mit entweder einem Rechts- oder einem Hochwert in der anderen Richtung codieren.

In weiterer Ausgestaltung des Verfahrens ist es vorteilhaft, wenn Positionsdaten innerhalb eines bestimmten Toleranzbereiches bei Abgleich der Positionsdatenlisten als gleich interpretiert werden. Dadurch wird beispielsweise verhindert, dass die rechte und die linke Fahrbahn einer Autobahn irrtümlicherweise als verschiedene Straßen interpretiert werden. Bei hinreichend guter Auflösung des Sensors zur Positionsbestimmung können eine Datenflut eng bei einander liegender Punkte und daraus resultierende Unklarheiten bei der Bestimmung des Straßenverlaufs verhindert werden.

Im Bereich von Straßenkreuzungen, Abfahrten, Auffahrten und dergleichen kann es vorkommen, dass im Verlauf der von den Positionsdaten beschriebenen Positionen im Vergleich zur eigenen Positionsdatenliste abweichende Positionsdatenlisten empfangen werden. Dies geschieht, wenn beispielsweise zwei zur Ausbildung des erfindungsgemäßen Verfahrens ausgebildete Kraftfahrzeuge, die in der Vergangenheit verschiedene Straßen benutzt haben, dem eigenen Kraftfahrzeug entgegen kommen und ihre Positionsdatenlisten versenden. Da zunächst unbekannt ist, welche dieser Straßen die ist, die das eigene Kraftfahrzeug befahren wird, ist es vorteilhaft, die abweichende Positionsdatenliste nach Abgleich der Daten, die den gleichen Verlauf beschreiben, bzw. Ergänzung zu speichern. Dabei kann vorgesehen sein, dass nur eine maximale Zahl, insbesondere 4 - 6, bevorzugt 5, abweichende Positionsdatenlisten gespeichert werden. Diese Positionsdatenlisten können dann anhand gewisser Kriterien analysiert werden, um den zukünftigen Straßenverlauf dennoch bestimmten zu können. Dazu wird vorzugsweise zu den abweichenden Positionsdatenlisten deren Empfangshäufigkeit gespeichert. Zur Bestimmung des zukünftigen Straßenverlaufs kann dann jene Positionsdatenliste herangezogen werden, deren Empfangshäufigkeit die größte ist. Insbesondere Autobahnen oder viel befahrene Bundesstraßen lassen sich so leicht identifizieren.

Alternativ oder zusätzlich kann auch vorgesehen sein, dass die eigene Positionsdatenliste bzw. die eigenen Positionsdatenlisten, so dies mehrere sind, bei einem Wechsel der Straße gelöscht und neu initialisiert werden. Positionsdatenlisten beziehen sich dann immer auf die spezielle Straße, auf der das eigene Kraftfahrzeug im Augenblick unterwegs ist. So wird auch verhindert, dass zu viele abweichende Positionsdatenlisten auftreten können. Ein Wechsel der Straße kann insbesondere anhand von von weiteren Erfassungsmitteln ermittelten Daten über den Betriebszustand des Kraftfahrzeugs, insbesondere bei Überschreitung eines Schwellwertes für die Gierrate, detektiert werden.

Die ermittelten Informationen über den zukünftigen Straßenverlauf und gegebenenfalls die Informationen über den Straßenzustand und den dort herrschenden Verkehr können auf vielfältige Art und Weise vorteilhaft zum Betrieb des Kraftfahrzeugs genutzt werden. So kann vorgesehen sein, dass die Informationen über den zukünftigen Straßenverlauf sowie gegebenenfalls die Informationen über den Straßenzustand und den dort herrschenden Verkehr an Fahrerassistenz- oder andere Fahrzeugsysteme weiter gegeben und von diesen zur Einstellung ihrer Betriebsparameter verwendet werden. ABS- und ESP-Systeme können auf den Straßenzustand optimiert werden. Längsführungssyteme können Informationen über einen bevorstehenden Stau, beispielsweise hinter einer Kuppe, vorteilhaft verwerten. Alternativ oder zusätzlich dazu ist es auch möglich, dass die Informationen über den zukünftigen Straßenverlauf sowie gegebenenfalls die Informationen über den Straßenzustand und den dort herrschenden Verkehr einem Fahrer durch ein Anzeigemittel zur Anzeige gebracht werden. Diese Anzeige kann beispielsweise eindimensional oder zweidimensional in Form einer Kartendarstellung erfolgen. Eine solche Kartendarstellung ist möglich, trotzdem keinerlei digitales Kartenmaterial verwendet wird. In eine solche eindimensionale oder zweidimensionale Darstellung können gegebenenfalls auch die Informationen über den Straßenzustand und den dort herrschenden Verkehr eingeblendet werden. Bei Vorliegen solcher Informationen ist es jedoch auch einfach möglich, beispielsweise eine Warnung vor einem Stau auf einem kleinen Display am Armaturenbrett unterzubringen. Viele weitere Ausgestaltungen zur Nutzung der Informationen sind denkbar.

Daneben betrifft die Erfindung ein Kraftfahrzeug mit einem Sensor zur Bestimmung der Position des Kraftfahrzeugs, einer Recheneinheit und einer Kommunikationseinrichtung, welches zur Durchführung des erfindungsgemäßen Verfahrens ausgebildet ist.

Weitere Vorteile und Einzelheiten der vorliegenden Erfindung ergeben sich aus den im folgenden beschriebenen Ausführungsbeispielen sowie anhand der Zeichnungen. Dabei zeigen:
- Fig. 1: eine Prinzipskizze eines erfindungsgemäßen Kraftfahrzeugs,
- Fig. 2: das erfindungsgemäße Kraftfahrzeug auf einer Straße mit geodätischem Raster und Positionen,
- Fig. 3: eine Skizze zur Erläuterung der Weitergabe von Positionsdatenlisten,
- Fig. 4: eine Skizze zur Unterscheidung von Positionsdatenlisten,
- Fig. 5: eine effiziente Kodierung von Positionsdatenlisten,
- Fig. 6: eine mögliche eindimensionale Anzeige der Verkehrslage vor dem Kraftfahrzeug, und
- Fig. 7: eine mögliche zweidimensionale Anzeige in Form einer Karte.

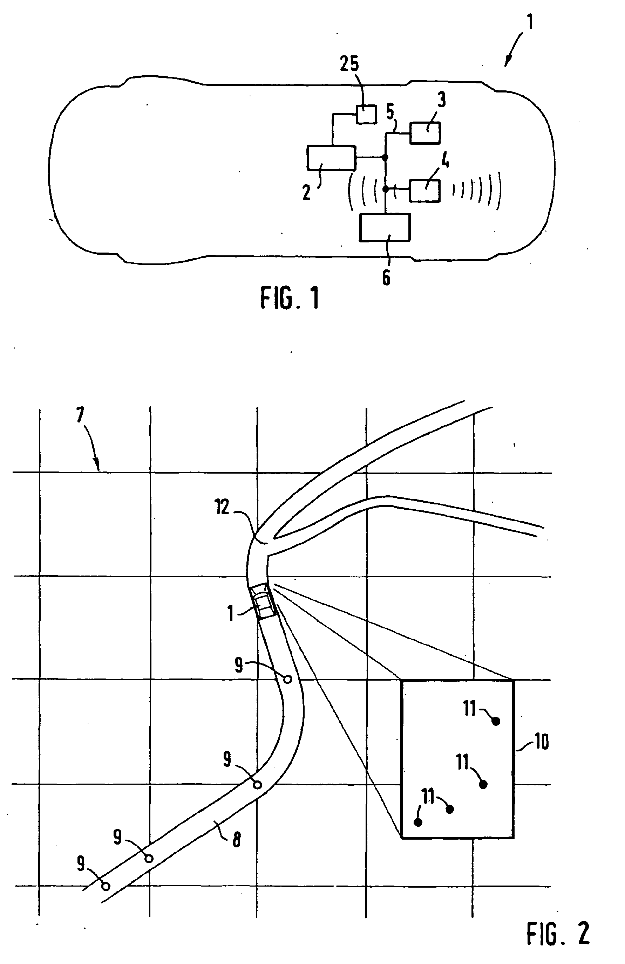

Fig. 1 zeigt ein erfindungsgemäßes Kraftfahrzeug 1. Es umfasst eine Recheneinheit 2 zum Speichern und Verwalten sowie Verarbeiten der Positionsdatenlisten, einen GPS-Sensor 3 zur Bestimmung der Position des Kraftfahrzeugs 1 sowie eine Kommunikationseinrichtung 4, mit Hilfe derer über ein WLAN-Netzwerk Positionsdatenlisten mit anderen Verkehrsteilnehmern ausgetauscht werden können. Die Komponenten 2, 3 und 4 kommunizieren über ein Bussystem 5, beispielsweise einen CAN-Bus. Zudem sind in dem Kraftfahrzeug weitere Erfassungsmittel, Betriebssysteme und Fahrerassistenzsysteme vorgesehen, die in Fig. 1 durch die ebenso an das Bussystem 5 angeschlossene Fahrzeugelektronik 6 symbolisiert werden.

Im Speicher der Recheneinheit 2 ist nun für die aktuell vom Kraftfahrzeug 1 befahrene Straße für beide Fahrtrichtungen jeweils eine Positionsdatenliste abgelegt. Jeder Eintrag der in geografischer Reihenfolge der beschriebenen Positionen abgelegten Positionsdaten in der Liste enthält in einer bestimmten Codierung zunächst die an einem geodätischen Raster bestimmten Koordinaten einer Position, also eines Ortes oder Punkts, die auf einer Rasterlinie liegt. Den Positionsdaten zugeordnet enthält jeder Eintrag zusätzlich von Erfassungsmitteln gewonnene, gegebenenfalls von anderen Verkehrsteilnehmern übermittelte Informationen, aus denen auf die Verkehrs-, Wetter- und Straßensituation an der Position geschlossen werden kann, sowie einen den Informationen zugeordneten Zeitpunkt, der letztendlich ihre Aktualität bestimmt. Es ist auch möglich, dass jeder einzelnen Information ein Zeitpunkt zugeordnet ist, wenn manche Verkehrsteilnehmer aufgrund mangelnder Erfassungsmittel oder Systeme nur eine bestimmte Zahl von Informationen aktuell ermitteln konnte. In einer anderen Ausführungsform ist es auch möglich, dass nur eine Positionsdatenliste für die aktuelle Straße geführt wird, jedoch bei den relevanten Informationen zwischen den Fahrtrichtungen unterschieden wird. So ist bei Nebel beispielsweise anzunehmen, dass beide Fahrbahnen an dieser Position dem Nebel unterliegen, ein Stau, beispielsweise bestimmt anhand der Durchschnittsgeschwindigkeit, ist jedoch häufig auf eine Fahrbahn, also Fahrtrichtung, beschränkt.

Zunächst soll die Ermittlung der Einträge in der Positionsdatenliste näher erläutert werden. Im Speicher der Recheneinheit 2 sind die Daten eines in Fig. 2 dargestellten, fest vorgegebenen geodätischen Rasters 7 abgelegt. Während das erfindungsgemäße Kraftfahrzeug 1 eine aktuelle Straße 8 entlangfährt, wird durch den GPS-Sensor 3 fortlaufend seine aktuelle Position bestimmt. Überfährt das Kraftfahrzeug, wie an den Punkten 9, eine Rasterlinie des geodätischen Rasters 7, die im Übrigen im Ausführungsbeispiel einen Abstand von ungefähr 100 Metern aufweisen, so wird der Positionsdatenliste ein weiterer Eintrag hinzugefügt. Dabei werden auch andere Erfassungsmittel ausgelesen und ihre zusätzlichen Informationen der entsprechenden Position 9 zugeordnet in der Positionsdatenliste abgelegt. Dies können beispielsweise die Geschwindigkeit des aufnehmenden Kraftfahrzeugs und/oder die Außentemperatur und/oder Daten eines Regensensors und/oder Daten eines Lichtsensors und/oder Daten über den Zustand der Lichtanlage und/oder Daten eines DSP-Systems und/oder Daten des Antiblockiersystems und/oder eine Unfallwarnung und/oder die Höheinformation und/oder der Betriebszustand des Motors sein. Die Positionsdatenliste ist in Ihrer Ausdehnung nach hinten durch einen maximalen Abstand beschränkt. Das bedeutet, dass bei Aufnahme eines neuen Eintrags beispielsweise ein oder mehrere alte Einträge gelöscht werden. Eine solche Begrenzung der Länge der aktuellen Positionsdatenliste kann auch eine vorgegebene Maximalzahl von Einträgen (beispielsweise 100) sein. Dabei wird auch bei Aufnahme eines Neueintrags der älteste Eintrag aus der Positionsdatenliste gelöscht.

Angenommen, das Kraftfahrzeug 1 hätte seine Positionsdatenliste am unteren Bildrand der Fig. 2 begonnen, so enthält die Positionsdatenliste nun vier Einträge, welche symbolisch in dem Kasten 10 dargestellt sind, worin die ausgefüllten Punkte 11 den Informationsgehalt der Positionsdatenliste ausdrücken. Bekannt ist mit Hilfe des vorgegebenen geodätischen Rasters 7 sowohl die absolute als auch die relative Position der Positionen 9. Zudem sind, wie durch das Ausfüllen der Punkte 11 symbolisiert ist, zusätzliche Informationen über die Positionen 9 in den Einträgen enthalten.

Erreicht das Kraftfahrzeug 1 die in Fig. 2 dargestellte T-Kreuzung 12, so kann es entweder der Straße 8 weiter folgen, wobei die Positionsdatenliste weitergeführt wird oder abbiegen. In diesem Fall ist es möglich, den Abbiegevorgang, beispielsweise anhand des Gierwinkels und/oder der Gierrate zu detektieren und die Positionsdatenliste zu löschen.

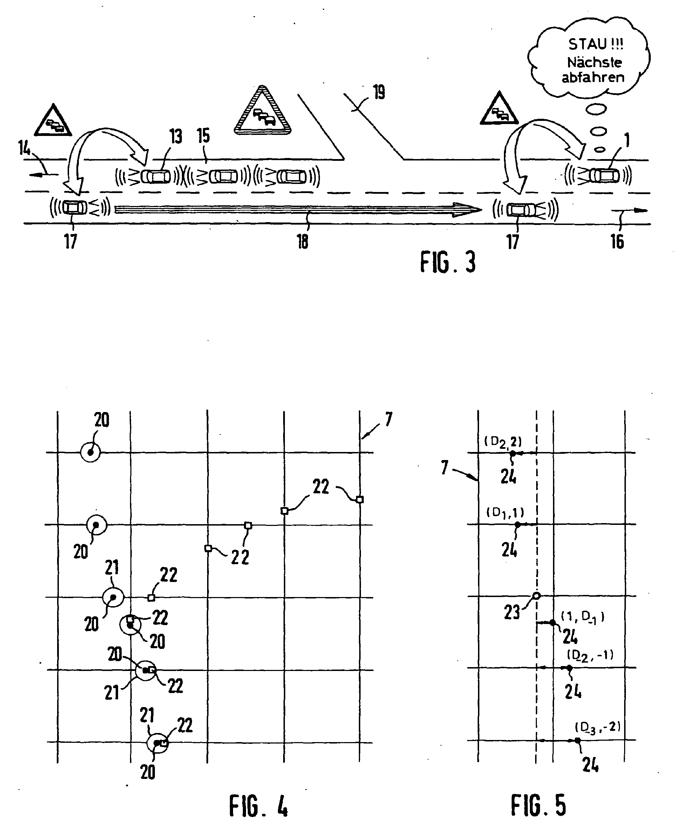

Fig. 3 zeigt ein Beispiel zur Übermittlung von Positionsdatenlisten mit Hilfe der Kommunikationseinrichtung 3 und die Anwendung. Ein zur Durchführung des Verfahrens ausgebildetes Kraftfahrzeug 13 steht in einer Fahrtrichtung 14 einer Straße 15 in einem Stau. Der Verkehr in der anderen Fahrtrichtung 16 läuft normal. Dort passiert den Stau nun ein weiteres zur Durchführung des Verfahrens ausgebildetes Kraftfahrzeug 17. Das Kraftfahrzeug 13 übersendet dem Kraftfahrzeug 17 seine Positionsdatenlisten und umgekehrt. Die Positionsdatenlisten beider Kraftfahrzeuge werden nun miteinander abgeglichen und anhand des gespeicherten Zeitpunktes entsprechend aktualisiert. Wie durch den Pfeil 18 angedeutet ist, bewegt sich das Kraftfahrzeug 17 sodann weiter und begegnet schließlich dem Kraftfahrzeug 1, woraufhin das Kraftfahrzeug 17 und das Kraftfahrzeug 1 ihre Positionsdatenlisten austauschen. Danach erfolgt auch hier ein Abgleich der Positionsdatenlisten. Die Recheneinheit 2 des Kraftfahrzeugs 1 verarbeitet nun die neu gewonnenen Informationen und bestimmt den vom Kraftfahrzeug 13 aufgenommenen zukünftigen Straßenverlauf. Zudem ist in den zusätzlichen Informationen zu jedem Eintrag auch die Durchschnittsgeschwindigkeit des Kraftfahrzeugs 13 enthalten. Diese ist im Staugebiet sehr niedrig, so dass neben dem Verlauf der Straße auch der Stau durch die Recheneinheit 2 detektiert werden kann. Dieser Stau wird nun dem Fahrer des Kraftfahrzeugs 1 zur Anzeige gebracht, so dass dieser die Entscheidung treffen kann, zur Umfahrung des Staus beispielsweise an der nächsten Abfahrt 19 die aktuelle Straße zu verlassen. Weiterhin erhält die übrige Fahrzeugelektronik 5 von der Recheneinheit 2 neben den Informationen über den zukünftigen Straßenverlauf und Straßenzustand auch die Information des Staus. Weitere Betriebssysteme des Kraftfahrzeugs können entsprechend in ihren Parametern auf den bevorstehenden Stau oder das bevorstehende Abfahren angepasst werden. Auch das Kraftfahrzeug 17 kann nun wiederum die neuen Einträge der Positionsdatenlisten des Kraftfahrzeugs 1 nutzen und gegebenenfalls die älteren Daten des Kraftfahrzeugs 13 durch neuere ersetzen. Da auch die Höheninformation übermittelt ist, ermittelt die Recheneinheit des Kraftfahrzeugs 17 beispielsweise eine starke Steigung der Straße 15 im weiteren Verlauf derselben. Die Betriebsparameter des Motors werden hier beispielsweise entsprechend angepasst.

Mit Hilfe des Verfahrens ist es also möglich, durch die Kommunikation und das Führen der Positionsdatenlisten auch Informationen über die vor dem Fahrzeug liegende eigene Fahrtrichtung zu erhalten, im vorliegenden Beispiel dadurch, dass das entgegenkommende Kraftfahrzeug 17 die gesammelten Daten des Kraftfahrzeugs 13 zum Kraftfahrzeug 1 transportiert.

Die Recheneinheit 2 des Kraftfahrzeugs 1 bestimmt den vor dem Kraftfahrzeug liegenden Fahrbahnverlauf aus den empfangenen Positionsdatenlisten von entgegenkommenden und vorausfahrenden Fahrzeugen. Da - bedingt beispielsweise durch Autobahnabfahrten und Autobahnkreuze - diese Kraftfahrzeuge unterschiedliche Wege gefahren sein können, werden durch die Positionsdaten der Positionsdatenlisten gegebenenfalls abweichende Straßenverläufe beschrieben. Eine solche einen anderen Verlauf der Straße beschreibende Positionsdatenliste wird im folgenden als "abweichende Positionsdatenliste" bezeichnet. Die Recheneinheit 2 speichert nun eine geringe Anzahl, beispielsweise fünf, voneinander abweichende Positionsdatenlisten für den vorausliegenden Fahrbahnverlauf zusammen mit deren Empfangshäufigkeit. Dabei ersetzen neu empfangene Positionsdatenlisten alte Positionsdatenlisten mit geringer Empfangshäufigkeit. Der zu erwartende Fahrbahnverlauf wird anhand der Positionsdatenliste mit der größten Empfangshäufigkeit bestimmt. Insbesondere bei Autobahnen oder Bundesstraßen ist diese Annahme meist gültig.

Die Unterscheidung verschiedener Straßenverläufe soll anhand von Fig. 4 näher erläutert werden. Bei Empfang einer neuen Positionsdatenliste muss zunächst sichergestellt werden, dass sich diese auf die aktuell befahrene Straße bezieht. Dazu vergleicht die Recheneinheit 2 die beschriebene aktuelle Position und die Fahrtrichtung (gegebenenfalls +/- 180°, da es sich um Gegenverkehr handeln kann) miteinander. Ist noch kein Vergleichspunkt verfügbar, wird die Prüfung bis zum nächsten Überschreiten einer Rasterlinie zurückgestellt. Nur wenn die durch die Einträge beschriebene Position und Fahrtrichtung innerhalb eines bestimmten Toleranzbereiches übereinstimmen, handelt es sich um die aktuell vom Kraftfahrzeug befahrene Straße.

Sodann müssen gegebenenfalls verschiedene Straßenverläufe unterschieden werden. Dies ist mit Hilfe des vorgegebenen geodätischen Rasters 7 leicht möglich. Das GPS-System hat eine Genauigkeit, die weit über den Rasterabständen des geodätischen Rasters 7 liegt. So bestimmt der GPS-Sensor 3 die Position mit einer Genauigkeit von etwa 5 bis 10 Metern, wohingegen die Rasterung in diesem Fall mit 100 Metern erfolgt. Daher liegen bei identischem Straßenverlauf die einzelnen durch die Positionsdatenlisten beschriebenen Positionen innerhalb eines Toleranzbereichs im Rahmen der GPS-Genauigkeit. Dies ist in Fig. 4 genauer dargestellt, in der zwei zu vergleichende Positionsdatenlisten dargestellt sind. Eine erste Positionsdatenliste ist durch die kreisförmigen Punkte 20 dargestellt. Die sie umgebenden Kreise 21 geben den Toleranzbereich der GPS-Positionsbestimmung wieder. Der Toleranzbereich muss selbstverständlich nicht der Genauigkeit des GPS-Systems entsprechen, sondern kann auch unabhängig davon gewählt werden, sollte jedoch natürlich nicht kleiner als die GPS-Genauigkeit sein. Eine weitere Positionsdatenliste ist durch die quadratischen Punkte 22 in Fig. 4 eingezeichnet. Die ersten drei Punkte beider Positionsdatenlisten stimmen innerhalb des Toleranzbereiches überein, die Positionsdatenlisten werden bis dort hin als gleich erkannt. Danach weichen jedoch die beschriebenen Straßenverläufe deutlich voneinander ab. So können abweichende Positionsdatenlisten erkannt werden.

Fig. 5 dient zur Darstellung einer Möglichkeit der Codierung der Positionsdatenlisten. Die Verwendung des geodätischen Rasters 7 ermöglicht eine sehr effiziente Codierung der Positionsdatenlisten beim Austausch mit Hilfe der Kommunikationseinrichtung 3. Ein Implementierungsbeispiel für die Codierung der Positionsdatenlisten mit 100 Einträgen wird im folgenden näher ausgeführt. Zunächst wird eine Fixposition 23 absolut codiert. Diese Fixposition 23 kann beispielsweise der nächstgelegene Punkt auf einer Rasterlinie sein. Bei einer Genauigkeit von 0,6 Metern sind hierfür sechs weit ausreichend. Alle weiteren Positionen werden relativ zur Fixposition 23 codiert. Da entweder der Hoch- oder der Rechtswert einer zu codierenden weiteren Position auf einer Linie des geodätischen Rasters 7 liegen, lässt sich eine Position mit 3 Byte vollständig codieren. 1 Byte codiert ein ganzzahliges Vielfaches in Rastereinheiten für die auf dem Raster 7 liegende Komponente, mit 2 Byte wird der Abstand des Hoch- oder Rechtswerts der Position zum Hoch- bzw. Rechtswert der Fixposition 23 bestimmt. Beispiele für diese Codierung sind Fig. 5 zu entnehmen, wo diese immer in Klammern bei weiteren Positionen 24 angegeben ist. Dabei ist beispielsweise (D_{1,}1) folgendermaßen zu entschlüsseln. D₁ ist mit zwei Byte codiert und gibt in geeigneten Einheiten den Rechtswert, das bedeutet, den - in Fig. 5 vertikalen - Abstand von der gestrichelten Linie wieder. Die mit einem Byte codierte 1 an zweiter Stelle weist daraufhin, dass sich der Punkt einen Rasterabstand - in Fig. 5 nach oben - von der Fixposition 23 entfernt auf der nächsten Rasterlinie befindet.

Setzt man für die Codierung der zusätzlichen Informationen nochmals 8 Byte pro Eintrag an, so werden zur Codierung einer Positionsdatenliste mit 100 Einträgen beispielsweise nur 407 Byte benötigt.

Neben der Verwendung der zusätzlichen Informationen zur Einstellung von Betriebsparametern oder Betriebszuständen des Kraftfahrzeugs kann auch eine Anzeige für den Fahrer erfolgen. Dazu kann ein ebenso in Fig. 1 dargestelltes Anzeigemittel 25 vorgesehen sein. Ist als Anzeige ein Display vorhanden, beispielsweise ein LCD-Display, so bieten sich zwei bevorzugte Möglichkeiten zur Anzeige des zukünftigen Straßenverlaufs an.

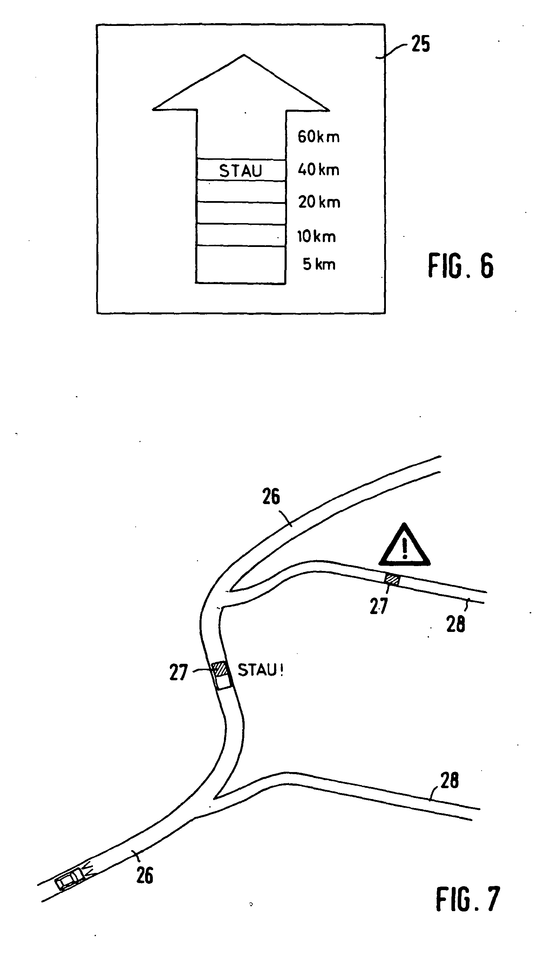

Eine erste Möglichkeit der Anzeige auf dem Anzeigemittel 25 ist in Fig. 6 dargestellt. Diese ist eindimensional und bezieht sich lediglich auf die aktuelle Straße. Die Krümmung wird hierbei nicht dargestellt, sondern lediglich das Vorhandensein von Staus oder widrigen Verkehrsumständen.

Eine informationsreichere Anzeige ist in Fig. 7 dargestellt. Durch die zweidimensionale Darstellung kann auch der Straßenverlauf 26, der durch die Recheneinheit 2 aus der Positionsdatenliste für die aktuelle Straße bestimmt würde, angezeigt werden. In den entsprechenden Abschnitten 27, in denen besondere Verkehrssituationen festgestellt wurden, werden diese Informationen eingeblendet. Dabei können hier auch die durch abweichende Positionsdatenlisten beschriebenen Verläufe weiterer Straßen 28 mit ihren speziellen Verkehrszuständen dargestellt werden. Damit ist eine Fahrtplanung ohne Verwendung digitalen Kartenmaterials und mit hoch aktuellen Informationen für den Fahrer des Kraftfahrzeugs möglich.

## Patentansprüche

1. Verfahren zur Bestimmung eines zukünftigen Straßenverlaufs (26) durch Kommunikation zwischen Kraftfahrzeugen (1, 13, 17) unabhängig von digitalen Karten,
wobei:
- fortlaufend durch einen Sensor (3) zur Bestimmung der Position des eigenen Kraftfahrzeugs (1, 13, 17) Positionsdaten in einem geodätischen Koordinatensystem ermittelt werden,
- in Abhängigkeit eines definierten Auswahlkriteriums die Positionsdaten in einer Positionsdatenliste abgelegt werden,
- fortlaufend oder zyklisch die aktuelle Positionsdatenliste über ein Kommunikationsmittel (4) gesendet wird,
- bei Empfang einer Positionsdatenliste eines anderen Verkehrsteilnehmers ein Abgleich der Positionsdatenlisten bzw. eine Ergänzung der eigenen Positionsdatenliste erfolgt und
- bei Vorhandensein von Daten, die Positionen vor dem eigenen Kraftfahrzeug (1, 13, 17) beschreiben, aus diesen in der Positionsdatenliste gespeicherten Daten Informationen über den zukünftigen Straßenverlauf (26) ermittelt werden.

2. Verfahren nach Anspruch 1,
**dadurch gekennzeichnet,**
**dass** die Positionsdaten bezüglich eines vorgegebenen geodätischen Rasters (7) ermittelt werden und bei Überschreiten einer Linie des Rasters (7) die Positionsdaten in der Positionsdatenliste abgelegt werden.

3. Verfahren nach Anspruch 2,
**dadurch gekennzeichnet,**
**dass** der Rasterabstand des vorgegebenen Rasters (7) 50 - 200 Meter beträgt.

4. Verfahren nach einem der vorangehenden Ansprüche,
**dadurch gekennzeichnet,**
**dass** der Zeitpunkt der Aufnahme der Positionsdaten, insbesondere des Überschreitens der Rasterlinie, bestimmt und in der Positionsdatenliste abgelegt wird.

5. Verfahren nach Anspruch 4,
**dadurch gekennzeichnet,**
**dass** bei Abgleich der Positionsdatenlisten nur die am zeitnächsten aufgenommenen Punkte in die eigene Positionsdatenliste aufgenommen werden.

6. Verfahren nach einem der vorangehenden Ansprüche,
**dadurch gekennzeichnet,**
**dass** von Erfassungsmitteln gewonnene zusätzliche Informationen, die den Betriebszustand des Kraftfahrzeugs (1, 13, 17) und/oder seine Umgebung beschreiben, in der Positionsdatenliste der entsprechenden Position zugeordnet abgelegt werden.

7. Verfahren nach Anspruch 6,
**dadurch gekennzeichnet,**
**dass** die zusätzlichen Informationen für beide Fahrtrichtungen (14, 16) getrennt abgelegt werden oder dass eine Positionsdatenliste für jede Fahrtrichtung (14, 16) geführt wird.

8. Verfahren nach Anspruch 6 oder 7,
**dadurch gekennzeichnet,**
**dass** die zusätzlichen Informationen die Geschwindigkeit des aufnehmenden Kraftfahrzeugs (1, 13, 17) und/oder die Temperatur und/oder Daten eines Regensensors und/oder Daten eines Lichtsensors und/oder Daten über den Zustand der Lichtanlage und/oder Daten eines ESP-Systems und/oder Daten eines Antiblockiersystems und/oder eine Unfallwarnung und/oder die Höhe über Normalnull und/oder der Betriebszustand des Motors und/oder eine fahrerinitiierte Radarmessgerätewarnung umfassen.

9. Verfahren nach einem der Ansprüche 6 bis 8,
**dadurch gekennzeichnet,**
**dass** aus den in der Positionsdatenliste gespeicherten Daten Informationen über den Straßenzustand und den dort herrschenden Verkehr ermittelt werden.

10. Verfahren nach einem der vorangehenden Ansprüche,
**dadurch gekennzeichnet,**
**dass** die Kommunikation über ein Funknetzwerk erfolgt.

11. Verfahren nach einem der vorangehenden Ansprüche,
**dadurch gekennzeichnet,**
**dass** die Positionsdaten durch einen GPS-Sensor (3) bestimmt werden.

12. Verfahren nach einem der vorangehenden Ansprüche,
**dadurch gekennzeichnet,**
**dass** die Länge der Positionsdatenliste beschränkt wird.

13. Verfahren nach einem der vorangehenden Ansprüche,
**dadurch gekennzeichnet,**
**dass** in die Positionsdatenliste nur Positionsdaten, die eine Position innerhalb eines vorbestimmten Abstandes vom eigenen Kraftfahrzeug (1, 13, 17) beschreiben, eingetragen werden und Positionsdaten beschreibend eine Position außerhalb dieses Abstandes gelöscht werden.

14. Verfahren nach einem der vorangehenden Ansprüche,
**dadurch gekennzeichnet,**
**dass** die Positionsdaten der Positionsdatenliste anhand eines mit der Positionsdatenliste versendeten Fixpositionsdatums kodiert werden.

15. Verfahren nach Anspruch 14,
**dadurch gekennzeichnet,**
**dass** die Positionsdaten der Positionsdatenliste anhand des Datums des am nächsten gelegenen Ortspunktes auf einer Rasterlinie kodiert werden.

16. Verfahren nach einem der vorangehenden Ansprüche,
**dadurch gekennzeichnet,**
**dass** Positionsdaten innerhalb eines bestimmten Toleranzbereiches bei Abgleich der Positionsdatenlisten als gleich interpretiert werden.

17. Verfahren nach Anspruch 16,
**dadurch gekennzeichnet,**
**dass** bei Empfang einer im Verlauf der von den Positionsdaten beschriebenen Positionen im Vergleich zur eigenen Positionsdatenliste abweichenden Positionsdatenliste die abweichende Positionsdatenliste nach Abgleich der Daten, die den gleichen Verlauf beschreiben, bzw. Ergänzung gespeichert wird.

18. Verfahren nach Anspruch 17,
**dadurch gekennzeichnet,**
**dass** nur eine Maximalzahl abweichende Positionsdatenlisten gespeichert werden.

19. Verfahren nach Anspruch 17 oder 18,
**dadurch gekennzeichnet,**
**dass** zusätzlich zu den abweichenden Positionsdatenlisten deren Empfangshäufigkeit gespeichert wird.

20. Verfahren nach Anspruch 19,
**dadurch gekennzeichnet,**
**dass** jene Positionsdatenliste zur Bestimmung des zukünftigen Straßenverlaufs (26) herangezogen wird, deren Empfangshäufigkeit die größte ist.

21. Verfahren nach einem der vorangehenden Ansprüche,
**dadurch gekennzeichnet,**
**dass** die eigene(n) Positionsdatenliste(n) bei einem Wechsel der Straße gelöscht und neu initialisiert wird.

22. Verfahren nach Anspruch 21,
**dadurch gekennzeichnet, dass**
ein Wechsel der Straße anhand von von weiteren Erfassungsmitteln ermittelten Daten über den Betriebszustand des Kraftfahrzeugs, insbesondere bei Überschreitung eines Schwellwertes für die Gierrate, detektiert wird.

23. Verfahren nach einem der vorangehenden Ansprüche,
**dadurch gekennzeichnet,**
**dass** die Informationen über den zukünftigen Straßenverlauf (26) sowie gegebenenfalls die Informationen über den Straßenzustand und den dort herrschenden Verkehr an Fahrerassistenz- oder andere Fahrzeugsysteme weitergegeben und von diesen zur Einstellung ihrer Betriebsparameter verwendet werden.

24. Verfahren nach einem der vorangehenden Ansprüche,
**dadurch gekennzeichnet,**
**dass** die Informationen über den zukünftigen Straßenverlauf (26) sowie gegebenenfalls die Informationen über den Straßenzustand und den dort herrschenden Verkehr einem Fahrer durch ein Anzeigemittel (25) zur Anzeige gebracht werden.

25. Verfahren nach Anspruch 24,
**dadurch gekennzeichnet,**
**dass** die Anzeige eindimensional oder zweidimensional in Form einer Kartendarstellung erfolgt.

26. Kraftfahrzeug mit einem Sensor (3) zur Bestimmung der Position des Kraftfahrzeugs, einer Recheneinheit (2) und einer Kommunikationseinrichtung (4), ausgebildet zur Durchführung des Verfahrens nach einem der Ansprüche 1 bis 25.

## Claims

1. Method for determining a future road profile (26) by communication between motor vehicles (1, 13, 17) independent of digital maps,
wherein:
- position data are continuously determined in a geodetic coordinate system by means of a sensor (3) for determining the position of the driver's own motor vehicle (1, 13, 17),
- the position data are stored in a position data list as a function of a defined selection criterion,
- the current position data list is transmitted continuously or cyclically via a communication means (4),
- when a position data list of another road user is received, reconciliation of the position data lists or supplementation of the driver's own position data list is carried out, and
- when data which describe positions in front of the driver's own motor vehicle (1, 13, 17) are present, information about the future road profile (26) is determined from said data which are stored in the position data list.

2. Method according to Claim 1,
**characterized**
**in that** the position data are determined with respect to a predefined geodetic grid (7) and when a line of the grid (7) is crossed the position data are stored in the position data list.

3. Method according to Claim 2,
**characterized**
**in that** the grid spacing of the predefined grid (7) is 50-200 meters.

4. Method according to one of the preceding claims,
**characterized**
**in that** the time when the position data are recorded, in particular when the grid line is crossed, is determined and stored in the position data list.

5. Method according to Claim 4,
**characterized**
**in that** when the position data lists are reconciled, only the recorded points which are directly subsequent are recorded into the vehicle's own position data list.

6. Method according to one of the preceding claims,
**characterized**
**in that** additional information which is acquired by detection means and which describes the operating state of the motor vehicle (1, 13, 17) and/or its surroundings are stored in the position data list assigned to the corresponding position.

7. Method according to Claim 6,
**characterized**
**in that** the additional information is stored separately for both directions of travel (14, 16), or in that a position data list is kept for each direction of travel (14, 16).

8. Method according to Claim 6 or 7,
**characterized**
**in that** the additional information comprises the speed of the recording motor vehicle (1, 13, 17) and/or the temperature and/or data of a rain sensor and/or data of a light sensor and/or data relating to the state of the light system and/or data of an ESP system and/or data of an anti-lock brake system and/or an accident warning and/or the height above mean sea level and/or the operating state of the engine and/or a driver-initiated radar measurement warning device.

9. Method according to Claims 6 to 8,
**characterized**
**in that** information relating to the state of the road and the traffic on it, which is stored in the position data list, are determined.

10. Method according to one of the preceding claims,
**characterized**
**in that** the communication takes place via a radio network.

11. Method according to one of the preceding claims,
**characterized**
**in that** the position data are determined by means of a GPS sensor (3).

12. Method according to one of the preceding claims,
**characterized**
**in that** the length of the position data list is limited.

13. Method according to one of the preceding claims,
**characterized**
**in that** only position data which describe a position within a predetermined distance from the driver's own motor vehicle (1, 13, 17) are input into the position data list, and position data describing a position outside this distance are deleted.

14. Method according to one of the preceding claims,
**characterized**
**in that** the position data of the position data list are encoded on the basis of a fixed position data item which is sent with the position data list.

15. Method according to Claim 14,
**characterized**
**in that** the position data of the position data list are encoded on the basis of the data item of the closest location point on a grid line.

16. Method according to one of the preceding claims,
**characterized**
**in that** position data within a specific tolerance range are interpreted as the same when the position data lists are reconciled.

17. Method according to Claim 16,
**characterized**
**in that** when a position data list which differs compared to the vehicle's own position data list in the course of the positions described by the position data is received, the differing position data list is stored after reconciliation of the data which describe the same profile, or supplementation.

18. Method according to Claim 17,
**characterized**
**in that** only a maximum number of differing position data lists are stored.

19. Method according to Claim 17 or 18,
**characterized**
**in that** in addition to the differing position data lists the reception frequency thereof is stored.

20. Method according to Claim 19,
**characterized**
**in that** the position data list with the maximum reception frequency is used to determine the future road profile (26).

21. Method according to one of the preceding claims,
**characterized**
**in that** the vehicle's own position data list or lists is/are deleted and newly initialized when the road changes.

22. Method according to Claim 21,
**characterized**
**in that** a changeover of the road is detected on the basis of data relating to the operating state of the motor vehicle, which are determined by further detection means, in particular when a threshold value for the yaw rate is exceeded.

23. Method according to one of the preceding claims,
**characterized**
**in that** the information relating to the future road profile (26) and, if appropriate, the information relating to the state of the road and the traffic on it is passed on to driver assistance systems or other vehicle systems and used by said systems to set their operating parameters.

24. Method according to one of the preceding claims,
**characterized**
**in that** the information about the future road profile (26) and, if appropriate, the information about the state of the road and the traffic on it is displayed to a driver by a display means (25).

25. Method according to Claim 24,
**characterized**
**in that** the display is carried out in a unidimensional or two-dimensional fashion in the form of a map illustration.

26. Motor vehicle having a sensor (3) for determining the position of the motor vehicle, a computer unit (2) and a communication device (4), designed to carry out the method according to one of Claims 1 to 25.

## Revendications

1. Procédé de détermination d'un futur tracé d'une route (26) par communication entre des véhicules automobiles (1, 13, 17) indépendamment de cartes numériques,
selon lequel :
- des données de position dans un système de coordonnées géodésique sont déterminées continuellement par un capteur (3) pour déterminer la position du véhicule automobile propre (1, 13, 17),
- les données de position sont consignées dans une liste de données de position en fonction d'un critère de sélection défini,
- la liste de données de position actuelle est envoyée continuellement ou périodiquement par le biais de moyens de communication (4),
- lors de la réception d'une liste de données de position d'un autre acteur du trafic, un alignement des listes de données de position ou un complément de la liste de données de position propre a lieu et
- en présence de données qui décrivent les positions devant le véhicule automobile propre (1, 13, 17), des informations sur le futur tracé de la route (26) sont déterminées à partir de ces données enregistrées dans la liste de données de position.

2. Procédé selon la revendication 1, **caractérisé en ce que** les données de position sont déterminées en référence à une grille géodésique (7) prédéfinie et les données de position sont consignées dans la liste de données de position en cas de franchissement d'une ligne de la grille (7).

3. Procédé selon la revendication 2, **caractérisé en ce que** l'écart de grille de la grille (7) prédéfinie est de 50 à 200 mètres.

4. Procédé selon l'une des revendications précédentes, **caractérisé en ce que** le moment de la consignation des données de position, notamment du franchissement de la ligne de la grille, est déterminé et consigné dans la liste de données de position.

5. Procédé selon la revendication 4, **caractérisé en ce que** lors de l'alignement des listes de données de position, seuls sont enregistrés dans la liste de données de position propre les points enregistrés les plus proches dans le temps.

6. Procédé selon l'une des revendications précédentes, **caractérisé en ce que** des informations supplémentaires acquises par des moyens de détection, lesquelles décrivent l'état de fonctionnement du véhicule automobile (1, 13, 17) et/ou son environnement, sont consignées dans la liste de données de position associées à la position correspondante.

7. Procédé selon la revendication 6, **caractérisé en ce que** les informations supplémentaires sont consignées séparément pour les deux sens de circulation (14, 16) ou **en ce qu'**une liste de données de position est tenue pour chaque sens de circulation (14, 16).

8. Procédé selon la revendication 6 ou 7, **caractérisé en ce que** les informations supplémentaires englobent la vitesse du véhicule automobile (1, 13, 17) effectuant le relevé et/ou la température et/ou les données d'un détecteur de pluie et/ou les données d'un détecteur de lumière et/ou les données sur l'état de l'équipement d'éclairage et/ou les données d'un système ESP et/ou les données d'un système antiblocage de sécurité et/ou une alerte d'accident et/ou l'altitude au-dessus du niveau de la mer et/ou l'état de fonctionnement du moteur et/ou une alerte initiée par le conducteur sur la présence d'un radar.

9. Procédé selon l'une des revendications 6 à 8, **caractérisé en ce que** des informations sur l'état de la route et le trafic qui y règne sont déterminées à partir des données enregistrées dans la liste de données de position.

10. Procédé selon l'une des revendications précédentes, **caractérisé en ce que** la communication s'effectue par le biais d'un réseau radioélectrique.

11. Procédé selon l'une des revendications précédentes, **caractérisé en ce que** les données de position sont déterminées par un capteur GPS (3).

12. Procédé selon l'une des revendications précédentes, **caractérisé en ce que** la longueur de la liste des données de position est limitée.

13. Procédé selon l'une des revendications précédentes, **caractérisé en ce que** seules sont consignées dans la liste de données de position les données de position qui décrivent une position à l'intérieur d'une distance prédéfinie par rapport au véhicule propre (1, 13, 17) et les données de position décrivant une position en dehors de cette distance sont effacées.

14. Procédé selon l'une des revendications précédentes, **caractérisé en ce que** les données de position de la liste de données de position sont codées au moyen d'une origine de position fixe envoyée avec la liste de données de position.

15. Procédé selon la revendication 14, **caractérisé en ce que** les données de position de la liste de données de position sont codées au moyen de l'origine du point local qui se trouve le plus proche sur une ligne de la grille.

16. Procédé selon l'une des revendications précédentes, **caractérisé en ce que** les données de position qui se trouvent à l'intérieur d'une plage de tolérances donnée lors de l'alignement des listes de données de position sont interprétées comme étant égales.

17. Procédé selon la revendication 16, **caractérisé en ce que** lors de la réception d'une liste de données de position différente de la liste de données de position propre au niveau du tracé des positions décrites par les données de position, la liste de données de position différente est enregistrée après l'alignement des données qui décrivent le même tracé ou son complément.

18. Procédé selon la revendication 17, **caractérisé en ce que** seul est enregistré un nombre maximum de listes de données de position différentes.

19. Procédé selon la revendication 17 ou 18, **caractérisé en ce que** la fréquence de réception des listes de données de position différentes est enregistrée en plus de celles-ci.

20. Procédé selon la revendication 19, **caractérisé en ce que** la liste de données de position qui est utilisée pour déterminer le futur tracé de la route (26) est celle dont la fréquence de réception est la plus élevée.

21. Procédé selon l'une des revendications précédentes, **caractérisé en ce que** la ou les listes de données de position propres sont effacées et réinitialisées en cas de changement de route.

22. Procédé selon la revendication 21, **caractérisé en ce qu'**un changement de route est détecté au moyen de données déterminées par des moyens de détection supplémentaires sur l'état opérationnel du véhicule automobile, notamment en cas de dépassement d'une valeur de seuil pour le taux de lacet.

23. Procédé selon l'une des revendications précédentes, **caractérisé en ce que** les informations sur le futur tracé de la route (26) et, le cas échéant, les informations sur l'état de la route et le trafic qui y règne sont transmises à des systèmes d'assistance au conducteur ou d'autres véhicules et sont utilisées par ceux-ci pour le réglage de leurs paramètres de fonctionnement.

24. Procédé selon l'une des revendications précédentes, **caractérisé en ce que** les informations sur le futur tracé de la route (26) et, le cas échéant, les informations sur l'état de la route et le trafic qui y règne sont affichées à l'attention du conducteur par le biais de moyens d'affichage (25).

25. Procédé selon la revendication 24, **caractérisé en ce que** l'affichage s'effectue en une dimension ou en deux dimensions sous la forme d'une représentation cartographique.

26. Véhicule automobile équipé d'un capteur (3) pour déterminer la position du véhicule automobile, d'une unité de calcul (2) et d'un dispositif de communication (4), configurés pour mettre en oeuvre le procédé selon l'une des revendications 1 à 25.
